# EUROPÄISCHE PATENTANMELDUNG

(11) **EP 4 570 530 A1**
(43) Veröffentlichungstag der Anmeldung: **18.06.2025**
(21) Anmeldenummer: 24213136.5
(22) Anmeldetag: 15.11.2024
(51) Int. Cl.: B60C 11/24, G01C 21/34, G01M 17/02

(54) **VERFAHREN ZUR BESTIMMUNG EINES REIFENABRIEBS EINES FAHRZEUGS**

(30) Priorität: 14.12.2023 DE 102023135135
(71) Anmelder: Continental Reifen Deutschland GmbH, 30175 Hannover (DE)
(72) Erfinder: Sahlmüller, Baldo, Dr., 30175 Hannover (DE); Aslan, Valid, 30175 Hannover (DE); Trujillo Martinez, Mauricio, Dr., 30175 Hannover (DE)
(74) Vertreter: Continental Corporation

(57) **Zusammenfassung**

Verfahren zur Bestimmung eines Reifenabriebs eines Fahrzeugs, aufweisend
- Bereitstellen von klassifizierten Kartendaten, wobei die klassifizierten Kartendaten eine durch Testfahrten ermittelte Verknüpfung zwischen einer Position des Fahrzeugs und einem Kennwert für den Reifenabrieb enthalten;
- Bereitstellen von erweiterten Kartendaten durch Übertragen der Verknüpfung auf Positionen, an denen keine Testfahrten durchgeführt wurden, mittels maschinellen Lernens, und
- Überwachung einer Position des Fahrzeugs und ermitteln eines Kennwerts für den Reifenabrieb aus der Position des Fahrzeugs, den klassifizierten Kartendaten sowie den erweiterten Kartendaten.

## Beschreibung

Die vorliegende Erfindung bezieht sich auf ein Verfahren zur Bestimmung eines Reifenabriebs eines Fahrzeugs unter Zuhilfenahme eines Modells.

Fahrzeugreifen haben ein Profil, das aus Sicherheitsgründen eine bestimmte Mindestprofiltiefe aufweisen sollte. In der Regel kann das Profil manuell vermessen werden und bei Bedarf ein Reifenwechsel durchgeführt werden. Insbesondere bei Fahrzeugen, die von einer Vielzahl von Personen gefahren werden (beispielsweise Car-Sharing, Mietfahrzeuge etc.) oder im Falle großer Fahrzeugflotten ist eine derartige manuelle Überprüfung jedoch sehr aufwendig und wird oftmals nicht oder unzureichend vorgenommen.

Es gibt verschiedene Ansätze, den Reifenabrieb automatisiert zu überwachen und/oder zu modellieren. Allerdings treten dabei verschiedene Probleme beispielsweise hinsichtlich der Übertragung von großen Datenmengen, möglicher Beschränkungen durch Datenschutzregelungen oder durch speziell erforderliche Hardware auf.

Es ist daher eine Aufgabe der vorliegenden Erfindung, ein Verfahren zur Bestimmung eines Reifenabriebs eines Fahrzeugs anzugeben, das automatisiert ausführbar ist, keine Übertragung von großen Datenmengen erfordert und zudem datenschutzkonform implementiert werden kann.

### Diese Aufgabe wird gelöst durch den Gegenstand des unabhängigen

Patentanspruchs. Vorteilhafte Ausführungsformen und Weiterbildungen sind Gegenstand der abhängigen Ansprüche.

Gemäß einem Aspekt der Erfindung wird ein Verfahren zur Bestimmung eines Reifenabriebs eines Fahrzeugs angegeben, aufweisend das Bereitstellen von klassifizierten Kartendaten, wobei die klassifizierten Kartendaten eine durch Testfahrten ermittelte Verknüpfung zwischen einer Position des Fahrzeugs und einem Kennwert für den Reifenabrieb enthalten. Ferner weist das Verfahren das Bereitstellen von erweiterten Kartendaten durch Übertragen der Verknüpfung auf Positionen, an denen keine Testfahrten durchgeführt wurden, mittels maschinellen Lernens auf. Ferner weist das Verfahren die Überwachung einer Position des Fahrzeugs und das Ermitteln eines Kennwerts für den Reifenabrieb aus der Position des Fahrzeugs, den klassifizierten Kartendaten sowie den erweiterten Kartendaten auf.

Für das Bereitstellen von klassifizierten Kartendaten werden Daten von Fahrzeugen genutzt, die Testfahrten in einer bekannten Region unternehmen. Die durch die Testfahrzeuge zur Verfügung gestellten Daten enthalten dabei auch Informationen über den Reifenabrieb.

Zudem enthalten diese Lerndaten die Position des Fahrzeugs, beispielsweise die GPS-Koordinaten des Fahrzeugs. Eine Karte der Region, in der die Testfahrten unternommen wurden, wird in Bereiche eingeteilt, beispielsweise Hexagone. Anschließend wird für jeden Bereich klassifiziert, welchen Einfluss er bzw. die Verweildauer des Fahrzeugs in diesem Bereich auf den Reifenabrieb hat. Aus den so zur Verfügung gestellten Daten lernt ein machine learning-Modell anschließend den Zusammenhang zwischen einer Region, insbesondere zwischen dem Straßennetz und gegebenenfalls der Topographie dieser Region, und dem Reifenabrieb. Daraus kann die Verknüpfung zwischen einer Position des Fahrzeugs und einem Kennwert für den Reifenabrieb ermittelt werden. Die Verknüpfung kann in einer Bewertung der Position in Bezug auf den Reifenabrieb bestehen.

Außer dem Kennwert für den Reifenabrieb können auch ein oder mehrere andere Kennwerte zugewiesen werden, beispielsweise für den Kraftstoffverbrauch.

Das Bereitstellen von erweiterten Kartendaten erfolgt dann mithilfe einer Extrapolation der Klassifizierung auf Gebiete, in denen keine Testfahrten durchgeführt wurden. Die Eingangsgröße der Extrapolation ist dabei insbesondere das Straßennetz in jedem Gebiet sowie die Topographie. Dabei kann das Straßennetz beispielsweise durch die Anzahl der Straßen, die Kategorie dieser Straßen (Autobahn, Landstraße, städtische Straße, Wohngebietsstraße etc.) sowie die Anzahl der Kreuzungspunkte klassifiziert werden. Durch eine Übertragung der Verknüpfung zwischen einer Position des Fahrzeugs und einem Kennwert für den Reifenabrieb auf derartige nicht durch Testfahrten erschlossene Gebiete kann die Verknüpfung zwischen der Position des Fahrzeugs und dem Kennwert für den Reifenabrieb auf weitere Gebiete ausgeweitet werden.

Anschließend wird die Klassifizierung genutzt, um den Reifenabrieb bei Fahrzeugen zu überwachen. Die Fahrzeuge können relativ lose überwacht werden, beispielsweise kann minütlich festgestellt werden, in welchem Gebiet sich ein Fahrzeug befindet. Für jeden Datenpunkt (Zeit, Gebiet) kann nun der Kennwert für den Reifenabrieb ermittelt werden.

Das Verfahren hat den Vorteil, dass es einfach ausführbar ist und keine Übertragung großer Datenmengen erfordert. Werden die Gebiete groß genug gewählt, ergibt sich auch kein Konflikt mit Datenschutzrichtlinien, die eine genaue Positionsbestimmung des Fahrzeugs nicht zulassen würden.

Gemäß einer Ausführungsform der Erfindung erfolgt das Ermitteln der Verknüpfung zwischen der Position des Fahrzeugs und dem Kennwert für den Reifenabrieb aus auf den Testfahrten ermittelten Daten, indem klassifiziert wird, welchen Einfluss eine Position und/oder Verweildauer des Fahrzeugs in einer Position auf den Reifenabrieb hat.

Das Übertragen der Verknüpfung auf Positionen, an denen keine Testfahrten durchgeführt wurden, erfolgt beispielsweise durch ein Erlernen des Einflusses einer Position und/oder einer Verweildauer des Fahrzeugs in einer Position auf den Reifenabrieb und durch einen Vergleich des Straßennetzes und/oder der Topographie der mittels Testfahrten untersuchten Positionen mit der aktuellen Position.

Mit anderen Worten: Das Modell lernt charakteristische Eigenschaften von Positionen bzw. Gebieten und verknüpft diese mit einem Kennwert für den Reifenabrieb, so dass es den Kennwert für den Reifenabrieb für nicht durch Testfahrten erschlossene Gebiete, deren charakteristische Eigenschaften jedoch bekannt sind, abschätzen kann. Die Klassifizierung der Kartendaten durch Testfahrten ermöglicht es, anhand der Kartendaten (insbesondere die Anzahl und Kategorie der Straßen, die Anzahl der Kreuzungspunkte und Ampeln, die Topographie und Geschwindigkeiten) bislang unbekannte Gebiete bzw. Positionen mit aus den Testfahrten bekannten Gebiete bzw. Positionen zu vergleichen.

Die Gebiete, in denen Testfahrten durchgeführt wurden oder nicht durchgeführt wurden, sind gemäß einer Ausführungsform der Erfindung in Vielecke, insbesondere Hexagone, eingeteilt. Auf diese Weise lässt sich ohne zusätzliche Maßnahmen die gesamte Karte abdecken.

Gemäß einer Ausführungsform wird als Position des Fahrzeugs dasjenige Hexagon, in dem sich das Fahrzeug befindet, ermittelt. Diese Ausführungsform hat den Vorteil, dass die Position des Fahrzeugs nicht mit hoher Genauigkeit bestimmt werden muss. Die Kenntnis des Hexagons, in dem sich ein Fahrzeug aufhält, reicht bereits aus. Auf diese Weise ist eine technisch aufwendige genaue Positionsbestimmung nicht notwendig. Aus Datenschutzgründen ist es ohnehin vorteilhaft bzw. teilweise sogar notwendig, darauf zu verzichten.

Gemäß einer Ausführungsform wird die Position des Fahrzeugs in vorgegebenen Intervallen ermittelt und es wird daraus ein Kennwert für den Reifenabrieb kumulativ bestimmt. Somit kann jederzeit aus dem bereits erfolgten Reifenabrieb auf den Reifenzustand geschlossen werden.

Wie sich herausgestellt hat, lässt sich die Genauigkeit der Modellierung verbessern, wenn zur Ermittlung des Kennwerts für den Reifenabrieb neben der Position des Fahrzeugs auch die aktuelle Geschwindigkeit des Fahrzeugs erfasst und verwendet wird.

Das Verfahren ist insbesondere für die Verwaltung einer Fahrzeugflotte geeignet.

Gemäß einem Aspekt der Erfindung wird ein Computerprogrammprodukt angegeben, umfassend Befehle, die bei der Ausführung des Programms durch einen Computer diesen veranlassen, das beschriebene Verfahren durchzuführen. Dabei kann es sich insbesondere, zumindest in Teilen, auch um eine Web- bzw. Cloudanwendung handeln.

Gemäß einem weiteren Aspekt der Erfindung wird ein computerlesbares Medium angegeben, umfassend Befehle, die bei der Ausführung durch einen Computer diesen veranlassen, das beschriebene Verfahren durchzuführen.

Ausführungsformen der Erfindung werden im Folgenden anhand schematischer Zeichnungen beispielhaft beschrieben.
- Figur 1: zeigt Schritte eines Verfahrens zur Bestimmung eines Reifenabriebs eines Fahrzeugs gemäß einer Ausführungsform der Erfindung und
- Figur 2: zeigt gemäß dem Verfahren aufbereitete Kartendaten.

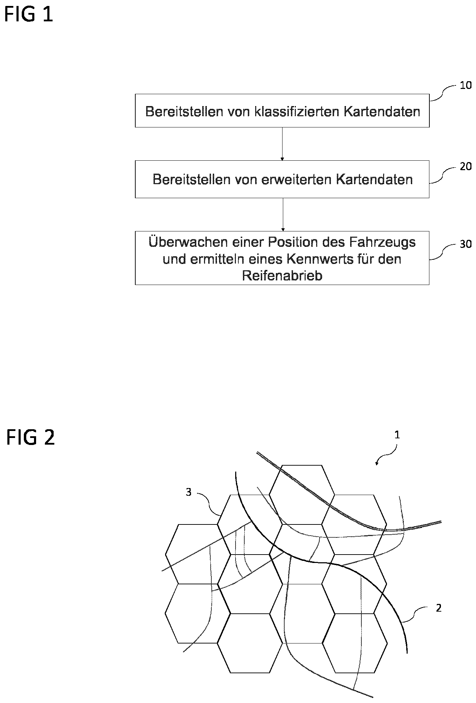

Figur 1 zeigt schematisch Schritte eines Verfahrens zur Bestimmung eines Reifenabriebs eines Fahrzeugs. In einem Schritt 10 werden klassifizierte Kartendaten bereitgestellt, die sowohl Informationen über das Straßennetz im betreffenden Gebiet als auch über bei Testfahrten gewonnene Informationen über den Reifenabrieb eines Fahrzeugs in dem betreffenden Gebiet enthalten.

In einem weiteren Schritt 20 erfolgt die Bereitstellung von erweiterten Kartendaten, mit denen eine Vorhersage des Reifenabriebs in einem bislang nicht durch Testfahrten erschlossenen Gebiet möglich ist. Dazu werden einem Modell, das bereits die Verknüpfung zwischen einer Position des Fahrzeugs und einem Kennwert für den Reifenabrieb im bereits bekannten Gebiet gelernt hat, Kartendaten zur Verfügung gestellt, die insbesondere Informationen über die Art der Straßen, Geschwindigkeiten, Kreuzungspunkte, Ampeln etc. enthalten.

Das Modell kann somit die Verknüpfung zwischen einer Position des Fahrzeugs und dem Kennwert für den Reifenabrieb, die es anhand des bekannten Gebietes gelernt hat, auf das noch nicht durch Testfahrten erschlossene Gebiet übertragen und somit die erweiterten Kartendaten bereitstellen.

Im Schnitt 30 erfolgen das Überwachen einer Position des Fahrzeugs sowie das Ermitteln eines Kennwerts für den Reifenabrieb.

Dabei werden die Schritte 10 und 20 durchgeführt, um die Werkzeuge zum Ermitteln eines Kennwerts für den Reifenabrieb im Schritt 30 zur Verfügung zu stellen. Der Schritt 30 dagegen wird permanent während der Fahrten des Fahrzeugs durchgeführt, um den Reifenabrieb zu überwachen.

Figur 2 zeigt eine Karte 1 eines Gebiets mit einem Straßennetz 2. Das Gebiet ist in der gezeigten Ausführungsform in Hexagone 3 eingeteilt. Bei der Durchführung des anhand von Figur 1 beschriebenen Verfahrens erfolgt die Positionsbestimmung eines Fahrzeugs lediglich so genau, dass ermittelt wird, in welchem Hexagon 3 sich das Fahrzeug zu einem festgelegten Zeitpunkt aufhält. Eine genauere Kenntnis der Fahrzeugposition ist nicht notwendig und kann auch beispielsweise aufgrund von Datenschutzbestimmungen unerwünscht sein.

### Bezugszeichenliste

- 1: Karte
- 2: Straßennetz
- 3: Hexagon
- 10: Schritt
- 20: Schritt
- 30: Schritt

## Patentansprüche

1. Verfahren zur Bestimmung eines Reifenabriebs eines Fahrzeugs, aufweisend
- Bereitstellen von klassifizierten Kartendaten, wobei die klassifizierten Kartendaten eine durch Testfahrten ermittelte Verknüpfung zwischen einer Position des Fahrzeugs und einem Kennwert für den Reifenabrieb enthalten;
- Bereitstellen von erweiterten Kartendaten durch Übertragen der Verknüpfung auf Positionen, an denen keine Testfahrten durchgeführt wurden, mittels maschinellen Lernens, und
- Überwachung einer Position des Fahrzeugs und ermitteln eines Kennwerts für den Reifenabrieb aus der Position des Fahrzeugs, den klassifizierten Kartendaten sowie den erweiterten Kartendaten.

2. Verfahren nach Anspruch 1,
wobei das Ermitteln der Verknüpfung zwischen der Position des Fahrzeugs und dem Kennwert für den Reifenabrieb aus auf den Testfahrten ermittelten Daten erfolgt, indem klassifiziert wird, welchen Einfluss eine Position und/oder Verweildauer des Fahrzeugs an einer Position auf den Reifenabrieb hat.

3. Verfahren nach Anspruch 1 oder 2,
wobei das Übertragen der Verknüpfung auf Positionen, an denen keine Testfahrten durchgeführt wurden, durch ein Erlernen des Einflusses einer Position und/oder einer Verweildauer des Fahrzeugs an einer Position auf den Reifenabrieb und durch einen Vergleich eines Straßennetzes (2) und/oder der Topographie der durch Testfahrten untersuchten Positionen mit der aktuellen Position erfolgt.

4. Verfahren nach einem der Ansprüche 1 bis 3,
wobei das Gebiet, in dem Testfahrten durchgeführt wurden, in Hexagone (3) eingeteilt ist.

5. Verfahren nach einem der Ansprüche 1 bis 4,
wobei das Gebiet, in dem keine Testfahrten durchgeführt wurden, in Hexagone (3) eingeteilt ist.

6. Verfahren nach Anspruch 4 oder 5,
wobei als Position des Fahrzeugs dasjenige Hexagon (3), in dem sich das Fahrzeug befindet, ermittelt wird.

7. Verfahren nach einem der Ansprüche 1 bis 6,
wobei die Position des Fahrzeugs in vorgegebenen Intervallen ermittelt und daraus der Kennwert für den Reifenabrieb kumulativ bestimmt wird.

8. Verfahren nach einem der Ansprüche 1 bis 7,
wobei zur Ermittlung des Kennwerts für den Reifenabrieb neben der Position des Fahrzeugs auch die aktuelle Geschwindigkeit des Fahrzeugs verwendet wird.

9. Verwendung des Verfahrens gemäß einem der Ansprüche 1 bis 8 zur Verwaltung einer Fahrzeugflotte.

10. Computerprogrammprodukt, umfassend Befehle, die bei der Ausführung des Programms durch einen Computer diesen veranlassen, das Verfahren gemäß einem der Ansprüche 1 bis 8 durchzuführen.

11. Computerlesbares Medium, umfassend Befehle, die bei der Ausführung durch einen Computer diesen veranlassen, das Verfahren gemäß einem der Ansprüche 1 bis 8 durchzuführen.
